(19)

Europäisches
Patentamt
European
Patent Office
Office européen
des brevets

(11)  **EP 4 127 094 B1**

(12)  **EUROPEAN PATENT SPECIFICATION**

(45) Date of publication and mention
of the grant of the patent:
**06.09.2023  Bulletin 2023/36**

(21) Application number: **21719964.5**

(22) Date of filing: **24.03.2021**

(51) International Patent Classification (IPC):
***C09K 5/06*** *(2006.01)*

(52) Cooperative Patent Classification (CPC):
**C09K 5/063**

(86) International application number:
**PCT/IB2021/052445**

(87) International publication number:
**WO 2021/191818 (30.09.2021 Gazette 2021/39)**

(54) **INERT MIXTURE AND ITS USE AS PHASE CHANGE MATERIAL FOR HIGH TEMPERATURE APPLICATIONS**

INERTE MISCHUNG UND IHRE VERWENDUNG ALS PHASENAUSTAUSCHMATERIAL FÜR HOCHTEMPERATURANWENDUNGEN

MÉLANGE INERTE ET SON UTILISATION COMME MATÉRIAU À CHANGEMENT DE PHASE POUR DES APPLICATIONS À HAUTE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2020  IT 202000006259**

(43) Date of publication of application:
**08.02.2023  Bulletin 2023/06**

(73) Proprietor: **Groppalli S.r.l.
29010 Gragnano (IT)**

(72) Inventors:
• **ROSSO, Mariacristina
10136 Torino (IT)**
• **NEGRISOLO, Francesco
29010 Agazzano (PC) (IT)**
• **GROPPALLI, Luciano
29010 Agazzano (PC) (IT)**

(74) Representative: **Palladino, Saverio Massimo et al
Notarbartolo & Gervasi S.p.A.
Viale Achille Papa, 30
20149 Milano (IT)**

(56) References cited:
**CN-A- 108 410 430        JP-A- H1 036 824
US-A1- 2016 090 520      US-A1- 2016 200 956**

• **DATABASE COMPENDEX [Online]
ENGINEERING INFORMATION, INC., NEW YORK,
NY, US; 2006, NAKADA H ET AL: "Estimation of
melting point/latent heat of binary mixtures of
phase change material of erythritol and
polyalcohol", XP002800783, Database accession
no. E20064410210017**

**EP 4 127 094 B1**

## Description

### FIELD OF THE INVENTION

Thermal energy storage technologies make it possible to accumulate energy from an external source (for example solar energy, but also residual thermal energy of a production process) so that it can then be used, even when the source itself is not available, either for generating electric energy or simply as a heating or cooling medium.

In recent years, various devices have been proposed that can accumulate energy through heat exchange processes.

The invention relates to an inert mixture and use thereof for accumulating thermal energy.

### STATE OF THE ART

Thermal energy storage technologies respond to the need to allow accumulating energy from an external thermal source so that it can then be used either in processes of conversion to electric energy or in thermal processes as a heating or cooling medium, even when the external source is not available.

These technologies are, for example, used in solar thermal plants to accumulate thermal energy from solar radiation and today represent one of the systems with which efforts are made to reduce the energy dependence of our society from traditional non-renewable resources, such as fossil fuels.

In recent years, various systems have been proposed to accumulate thermal energy. In general, the strategy used is based on the use of a storage medium that accumulates the thermal energy acquired during the hours of availability of the external source and then makes the energy available during the hours in which the source itself is no longer able to supply it.

Among the main thermal energy storage systems, there are those stocking thermal energy by heating or cooling a storage material from which, subsequently, the accumulated energy can be regained by heat exchange, in order to heat or cool or to produce electric energy.

Among the most studied and used thermal energy storage materials in recent years, there are phase change materials ("PCM"), which use a phase change process of the material to accumulate thermal energy. The phase change takes place in well-defined and different temperature and pressure ranges for the different types of materials. In practice, PCMs whose phase change is at temperature ranges appropriate for the concerned application are chosen.

The phase change materials that are currently most studied are generally attributable to five distinct categories: that of paraffinic materials, that of fatty acids and esters, that of hydrated salts, that of eutectic mixtures of salts and that of polyols.

With respect to the materials that accumulate thermal energy in the absence of phase transition and therefore with an increase in temperature ("sensible energy"), phase change materials have the advantage of allowing, for the same volume used, the accumulation of a generally greater amount of thermal energy, as well as the possibility of making said energy available at well-defined temperature values, under substantially isothermal conditions, thus making the systems for reusing said energy more efficient.

On the other hand, the currently known phase change materials of the type referred to above may have some technological and functional limitations. In particular, the paraffinic phase change materials generally have a low thermal conductivity and, therefore, in some uses it is necessary to resort to additions and/or solutions which can reduce their efficiency and increase the costs of use. They also have a slow crystallization kinetics and a moderate flammability. The hydrated salts, on the other hand, have a generally higher thermal conductivity than the paraffinic materials and high phase transition energies, but have the disadvantage of being in many cases chemically aggressive towards the metal components of the devices in which they are used and of being not very stable already after a few cycles of use due to the onset of phase segregation phenomena, requiring the addition of additives which, however, can reduce the energy storage capacity of the material.

Instead, phase change materials based on fatty acids and esters have high melting energy but a generally low thermal conductivity and are unstable at high temperatures and moderately flammable and corrosive.

The phase transition of eutectic mixtures of salts is at temperatures higher than those envisaged by the material of the present patent and which cannot be used in the envisaged applications.

Finally, the polyols have a high thermal capacity but may be subject to significant sub-cooling phenomena, which lead to a deviation between the phase change temperature during heating (in which the material accumulates thermal energy) and the phase change temperature during cooling (in which the material returns the thermal energy).

Within the category of PCMs, all of the above classes present difficulties to operate in a temperature range between 70 and 110°C, specifically, many compounds or mixtures may present crystallization ranges within these values, but in the vast majority of cases the melt transition occurs for values greater than the range of specific interest.

In cases where both transitions fall within the relevant range, problems related to low thermal conductivity and/or low transition enthalpy (e.g. biphenyls or stearates) or their intrinsic toxicity or corrosivity towards many materials (e.g. Ba(OH)·8H$_2$O) have severely limited their use.

In this context, International Patent Application No. PCT/IB2019/058478 on behalf of Applicant describes a phase change material comprising an inert mixture comprising:

- at least one polyol selected from the group consisting of: glycerol, erythritol, mannitol, pentaerythritol, xylitol, dulcitol, sorbitol, ribitol, maltitol, and inositol;
- at least one inorganic salt soluble in said polyol, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate; and
- at least one nucleating agent selected from the group consisting of carbon powder, metallic powder, and silicon carbide;

wherein:

- the mole ratio between the at least one polyol and the at least one inorganic salt is in the range from 99:1 to 50:50; and
- the at least one nucleating agent is present in the form of particles having a size in the range from 1 to 50 microns, measured by the laser diffractometry method according to the ISO standard 13320:2009 (E).

The inert mixture according to international patent application No. PCT/IB2019/058478 exhibits in a wide temperature window of use, in the range from - 40°C to 200°C, high phase change energy, as well as high thermal conductivity, high chemical stability, chemical inertness characteristics as well as absence of significant sub-cooling phenomena. JP H10 36824 A discloses a heat storage material composition comprising erythritol and sodium chloride or potassium chloride as a melting point adjusting agent.

However, the Applicant has perceived that accumulating thermal energy still remains a particularly complex task, requiring the development of new and improved phase change materials, when said thermal energy accumulation is carried out in the range between 70 and 110°C. In particular, in this specific temperature range, many compounds and mixtures present a significant hysteresis phenomenon between the phase change temperature being accumulated and the thermal energy temperature released. These conditions are, in particular, those usual in thermal energy storage equipment for various industrial applications and in domestic use. The primary aim of the present invention is therefore to identify a new type of materials capable of reducing and/or solving the aforementioned drawbacks.

## SUMMARY OF THE INVENTION

In accordance with the present invention, Applicant has surprisingly found that these desired characteristics can be achieved by arranging an inert mixture comprising at least one suitably identified polyol, at least one suitably identified salt, and trimethylolpropane.

Therefore, in a first aspect thereof the present invention relates to an inert mixture comprising:

- at least one polyol selected from the group consisting of: glycerol, erythritol, mannitol, pentaerythritol, xylitol, dulcitol, sorbitol, ribitol, maltitol, and inositol;

- at least one inorganic salt, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and at least one anion selected from the group consisting of: a halide, a silicate, and a sulfate; and

- at least one hydroxylated compound selected from the group consisting of: trimethylolpropane, menthol, neopentyl alcohol, and guaiacol;

wherein:

- the mole ratio between the at least one polyol and the at least one inorganic salt is in the range from 99:1 to 50:50; and

- the amount of said at least one hydroxylated compound is in the range from 1 % to 20% by weight, with respect to the total weight of the inert mixture.

In fact, it has been surprisingly discovered that by preparing such an inert mixture, in which at least one polyol as defined herein and at least one inorganic salt as defined herein are present in a specific mole ratio range in the presence of specific amounts of trimethylolpropane, it is possible to obtain an inert material capable of reducing and/or solving the aforementioned drawbacks of traditional phase change materials, particularly with regard to the window of use in the range between 70 and 110 °C. In fact, the inert mixture presents characteristics that make its use in the range between 70 and 110 °C particularly advantageous, a limited hysteresis range, a more regular release of the accumulated thermal energy and in particular lower than the hysteresis range of a mixture containing only at least one polyol and at least one inorganic salt, with consequent improvement in the usability of the returned heat. This implies that, for the same temperature of thermal energy accumulation, the same is then on average released (i.e. returned) at a higher temperature than materials with a higher hysteresis range.

The inert mixture according to the present invention also has further advantages such as a high phase change energy, a lower loss of phase change energy than a mixture containing only at least one polyol and at least one inorganic salt in which the phase transition temperature has been lowered by the addition of other compounds which are not reactive towards the mixture, as well as high thermal conductivity, high chemical stability, chemical inertia characteristics as well as the absence of significant sub-cooling phenomena with a more regular release of the crystallization energy. The mixture also exhibits a more regular heat release curve, indicative of more regular crystallization kinetics than the analogous mixture without the addition of the at least one hydroxylated compound as defined herein.

In a preferred aspect thereof, the inert mixture according to the present invention comprises:

- at least one polyol selected from the group consisting of: glycerol, erythritol, mannitol, pentaerythritol, dulcitol, sorbitol, maltitol, and inositol; and

- at least one inorganic salt, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and at least one anion selected from the group consisting of: a halide, a silicate, and a sulfate;

wherein the mole ratio of the at least one polyol to the at least one inorganic salt is in the range from 99:1 to 60:40.

Advantageously, such a mixture exhibits in a temperature window between 70 and 110 °C a limited hysteresis range, high phase change energy, high chemical stability, chemical inertia characteristics as well as absence of significant sub-cooling phenomena. This makes said mixture particularly suitable to be used for accumulating thermal energy in the sector of the production of steam or other hot fluids to be used for industrial and/or domestic applications.

In a further aspect thereof, the present invention also relates to the use of the inert mixture according to the present invention to accumulate thermal energy. Thanks to the aforementioned properties, in fact, the inert mixture according to the present invention is effectively usable for accumulating thermal energy.

In a preferred embodiment of said aspect, the present invention relates to the use of the inert mixture according to the present invention as a phase change material. Thanks to the specific combination of components thereof, the inert mixture according to the present invention in fact has at least one phase transition in a window of temperatures normally used in thermal energy storage devices, which makes the use thereof as a phase change material particularly advantageous. Advantageously, the inert mixture according to the present invention has at least one phase transition in the temperature range from 70 °C to 110 °C.

## BRIEF DESCRIPTION OF THE DRAWINGS

In the drawings:

- figure 1 shows the experimental apparatus used to evaluate the thermal properties in the examples of the present application;
- figure 2 shows the time/Temperature Curve of the mixture according to Reference Example 1;
- figure 3 shows the time/Temperature Curve of the mixture according to Reference Example 2; and
- figure 4 shows the time/Temperature Curve of the mixture according to Example 2.

## DETAILED DESCRIPTION OF THE INVENTION

The present invention can be presented in one or more of its aspects or one or more of the preferred characteristics reported below, which can be combined with one another as preferred according to the application requirements.

Within the scope of the present invention a new type of material has been identified whose energy characteristics linked to a phase change, make the use thereof particularly effective as a phase change material, in particular for

EP 4 127 094 B1

applications related to accumulating thermal energy.

More in particular, in a first aspect thereof the present invention relates to an inert mixture comprising:

- at least one polyol selected from the group consisting of: glycerol, erythritol, mannitol, pentaerythritol, xylitol, dulcitol, sorbitol, ribitol, maltitol, and inositol;

- at least one inorganic salt, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and at least one anion selected from the group consisting of: a halide, a silicate, and a sulfate; and

- at least one hydroxylated compound selected from the group consisting of: trimethylolpropane, menthol, neopentyl alcohol, and guaiacol;

wherein:

- the mole ratio between the at least one polyol and the at least one inorganic salt is in the range from 99:1 to 50:50; and

- the amount of said at least one hydroxylated compound is in the range from 1% to 20% by weight, with respect to the total weight of the inert mixture.

In the present invention when the definition is used:

- "Inert mixture" means a mixture which under its normal conditions of use does not give rise to chemical reactions among its components;

- "Normal conditions of use" means a window of temperatures in the range of Phase change temperature 70°C to Phase change temperature 110°C; and

- "Inorganic salt" means an ionic compound comprising one or more mono- or polyvalent cations and one or more mono- or polyvalent anions, in which said cations and anions are both of an inorganic nature.

Without for this reason wishing to be linked to a specific theory, it is believed that thanks to the specific physical interaction between the types of components of the mixture according to the present invention, a material is obtained having characteristics of usability window, hysteresis range, phase change energy, thermal conductivity, chemical stability, chemical inertia characteristics as well as absence of significant sub-cooling phenomena, which make it particularly effective for use as a phase change material and in applications related to accumulating thermal energy, for example in the sector of production of steam or other hot fluids to be used for industrial and/or domestic applications.

In particular, the Applicant has in fact surprisingly found that the combined use of at least one inorganic salt, and at least one hydroxylated compound as defined herein makes it possible to act synergistically and modify the thermal properties of the polyol so as to improve them, by at the same time guaranteeing them stability over time which allows obtaining a phase change material with improved characteristics with respect to traditional materials.

The inert mixture according to the present invention comprises at least one polyol selected from the group consisting of: glycerol, erythritol, mannitol, pentaerythritol, xylitol, dulcitol, sorbitol, ribitol, maltitol, and inositol.

Preferably, the at least one polyol is selected from the group consisting of: erythritol, mannitol, pentaerythritol, and inositol. More preferably, the at least one polyol is selected from the group consisting of pentaerythritol, erythritol, and mannitol. Even more preferably, the at least one polyol is selected from the group consisting of erythritol, and mannitol.

In a preferred embodiment, the at least one polyol selected from the group consisting of: erythritol, mannitol, pentaerythritol, dulcitol, sorbitol, maltitol, and inositol. More preferably, when the at least one polyol is selected from said group, the mole ratio of the at least one polyol to the at least one inorganic salt is in the range from 99:1 to 60:40.

This makes such an inert mixture particularly suitable to be used to accumulate thermal energy in the sector of electric energy production and steam production, advantageously having the same a high phase change energy, high chemical stability, characteristics of chemical inertia as well as absence of significant sub-cooling phenomena in a temperature window comprised between 70°C and 110°C.

The inert mixture according to the present invention comprises at least one inorganic salt, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate.

5

Advantageously, said at least one inorganic salt is soluble in the at least one polyol according to the invention.

In the context of the present invention, the expression "inorganic salt soluble in said polyol" means an inorganic salt capable of forming, when added to at least one polyol according to the present invention in an amount of at least 2% by weight with respect to the sum of the weight of salt and polyol, with said polyol a molten mixture in homogeneous phase, after heating up to a temperature at least equal to the melting temperature of said mixture.

Preferably, the at least one metal is selected from the group consisting of: lithium, sodium, potassium, strontium, barium, titanium, vanadium, chromium, manganese, iron, cobalt, nickel, and copper. More preferably, the at least one metal is selected from the group consisting of: lithium, sodium, potassium, and iron.

Preferably, in the inert mixture according to the present invention the anion of the at least one inorganic salt according to the invention is selected from the group consisting of: a halide, and a sulfate, more preferably selected from the group consisting of: a halide.

In a particularly preferred embodiment, the at least one inorganic salt is a chloride or a sulfate of at least one metal selected from the group consisting of: lithium, sodium, potassium. Examples of said at least one inorganic salt according to said particularly preferred embodiment are: lithium chloride, lithium sulfate, sodium chloride, potassium chloride, sodium sulfate, potassium sulphate, double aluminium and potassium sulphate.

Other inorganic salts advantageously usable in the mixture according to the invention are magnesium chloride and calcium chloride.

Preferably, the at least one inorganic salt according to the present invention has a melting enthalpy equal to or greater than 300 kJ/kg.

In the context of the present invention it has in fact been found that the use of one or more of said inorganic salts according to the present invention in the inert mixture according to the present invention allows obtaining a mixture having a phase change energy greater than the values obtainable from an identical amount of the at least one polyol.

Preferably and advantageously, in the mixture according to the present invention the mole ratio of the at least one polyol to the at least one inorganic salt is in the range from 99:1 to 60:40, more preferably in the range from 99:1 to 70:30, even more preferably in the range from 98:2 to 75:25.

The inert mixture according to the present invention comprises from 1% to 20% by weight, with respect to the total weight of the total mixture, of at least one hydroxylated compound selected from the group consisting of: trimethylolpropane, menthol, neopentyl alcohol, and guaiacol. Preferably, the inert mixture according to the present invention comprises from 2% to 15% by weight, with respect to the total weight of the total mixture, of said at least one hydroxylated compound.

In a preferred embodiment, in said inert mixture according to the present invention said at least one hydroxylated compound is trimethylolpropane.

In a preferred embodiment of the invention, said inert mixture comprises from 1 to 20 % by weight, with respect to the total weight of the inert mixture, of trimethylolpropane. More preferably, said inert mixture comprises from 2% to 15% by weight, with respect to the total weight of the total mixture, of trimethylolpropane.

Preferably, the inert mixture according to the present invention comprises at least one polyether selected from the group consisting of polyethylene glycol (PEG), and methoxy polyethylene glycol (mPEG).

When present, said at least one polyether is preferably present in the inert mixture according to the present invention in an amount in the range from 1% to 20% by weight, with respect to the total weight of the mixture.

Preferably, said at least one polyether has an average molecular weight in the range from 2000 to 6000 Da.

Preferably, said at least one polyether comprises methoxy polyethylene glycol in an amount in the range from 1 to 20% by weight, with respect to the total weight of said at least one polyether.

In a preferred embodiment of the present invention, said at least one polyether is polyethylene glycol (PEG).

Types of polyethylene glycol (PEG) and methoxy polyethylene glycol (mPEG) that can be used in the inert mixture according to the present invention are commercially available, and generally marketed under conventional names such as PEG xxx or mPEG xxx, where xxx denotes the average molecular weight of the polymer. Commercial grades of PEG and mPEG are Carbowax™, polyethylene glycol PEG(4000) manufactured by Dow Chemical Company, polyethylene glycol 4000 manufactured by Merck Millipore.

Preferably, the inert mixture according to the present invention comprises at least one nucleating agent selected from the group consisting of carbon powder, metallic powder, and silicon carbide.

Although the inert mixture according to the present invention does not have significant sub-cooling phenomena under normal conditions of use, at least one nucleating agent is present in the inert mixture itself, so as to further improve the characteristics of the phase change, such as for example the crystallization kinetics and the global thermal conductivity value thereof.

The at least one nucleating agent is preferably selected from the group consisting of carbon powder, metallic powder. Preferably, said carbon powder is selected from the group consisting of: graphite, carbon black, graphene, nanotubes.

Preferably, the at least one nucleating agent is present in the form of particles having a size in the range from 1 to 50 microns, more preferably in the range from 5 to 20 microns, measured by the laser diffractometry method according to the ISO standard 13320:2009 (E).

Preferably, the at least one nucleating agent is present in an amount in the range from 0.2% to 20% by weight, more preferably in the range from 5% to 10% by weight, with respect to the total weight of the inert mixture.

Said amount has in fact been found to be optimal for obtaining an increase in the crystallization kinetics and in the thermal conductivity value of the inert mixture.

Advantageously, the inert mixture according to the present invention shows phase transition enthalpy values which make the use thereof particularly effective as a phase change material in applications related to accumulating thermal energy.

Preferably the inert mixture according to the present invention has a phase transition enthalpy equal to or greater than 150 kJ/kg, more preferably equal to or greater than 200 kJ/kg.

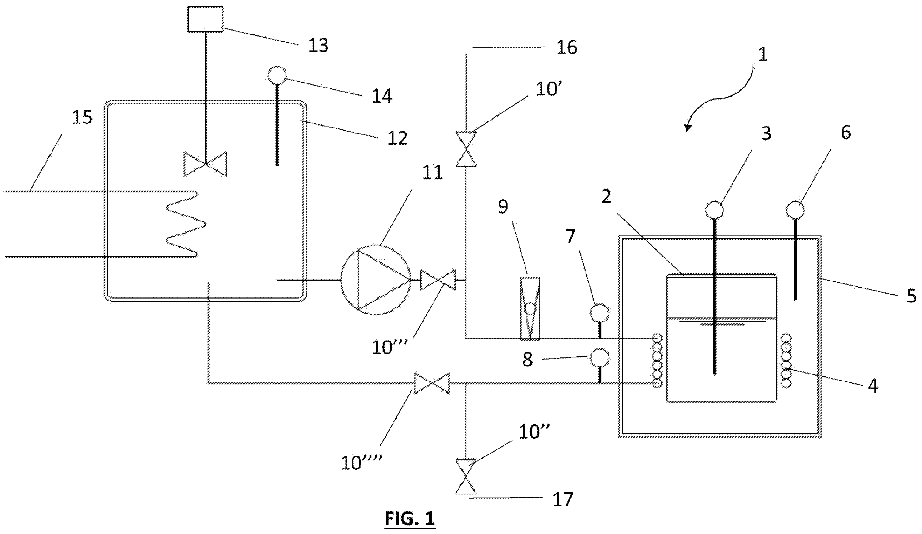

An instrument suitable for carrying out such a measurement is, for example, the apparatus shown in figure 1 and described in detail in its conformation and in its operation later in Reference example 1, with which it is possible to observe the behaviour of a sample with a mass much higher than that which can be analysed by a normal DSC apparatus, thus significantly improving the reliability of the measurement.

In fact, it has been unexpectedly found that said value of phase transition enthalpy is particularly suitable for applications of the inert mixture according to the present invention in the sector of thermal energy storage technologies for the production of steam or other hot fluids to be used for industrial and/or domestic applications.

Thanks to the specific combination of the above-mentioned types of components, in particular of the at least one polyol, of the at least one inorganic salt as defined above, and of said at least one hydroxylated compound as defined herein, the inert mixture according to the present invention exhibits at least one phase transition in a temperature window under the normal conditions of use of thermal energy storage devices in the sector of the production of steam or other hot fluids to be used for industrial and/or domestic applications.

Preferably, the inert mixture according to the present invention has at least one phase transition in the temperature range from 70°C to 110 °C.

Preferably the at least one phase transition is of the solid-liquid or solid-solid type.

The mixture according to the present invention may be prepared by any method known to the person skilled in the art, whereby the components of said mixture may be mixed.

The mixture according to the present invention can be prepared by a method which comprises the steps of:

- providing at least one polyol selected from the group consisting of: glycerol, erythritol, mannitol, pentaerythritol, xylitol, dulcitol, sorbitol, ribitol, maltitol, and inositol;

- at least one inorganic salt, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and at least one anion selected from the group consisting of: a halide, a silicate, and a sulfate;

- adding at least one hydroxylated compound selected from the group consisting of: trimethylolpropane, menthol, neopentyl alcohol, and guaiacol; and

- mixing the at least one polyol, the at least one inorganic salt and said at least one hydroxylated compound, wherein the at least one polyol and the at least one inorganic salt are in a mole ratio in the range from 99:1 to 50:50, and wherein the amount of said at least one hydroxylated compound is such that it represents from 1 to 20% by weight of the total weight of the mixture.

Preferably, the method for preparing the mixture according to the present invention comprises the step of: - heating the inert mixture up to a temperature at least equal to its melting temperature.

Preferably, the step of heating the mixture is carried out in the presence of a controlled atmosphere, more preferably in an inert atmosphere.

Preferably, the method for preparing the mixture according to the present invention comprises the step of: - regulating the water content of the inert mixture.

In a preferred embodiment, said step of regulating the water content of the inert mixture, comprises: regulating the water content of the inert mixture to a water content equal to or less than 2% by moles, more preferably equal to or less than 1% by moles, with respect to the total moles of the inert mixture.

Preferably, said step of regulating the water content of the inert mixture can be advantageously carried out by regulating the water content of the single components both before mixing and after mixing thereof, according to any method known to the person skilled in the art for this purpose.

Preferably, the method for preparing the mixture according to the present invention comprises the step of: - adding at least one nucleating agent selected from the group consisting of carbon powder, metallic powder, and silicon carbide.

Preferably, the at least one nucleating agent is added in an amount in the range from 0.2% to 20% by weight, more preferably in the range from 5% to 10% by weight, with respect to the total weight of the inert mixture.

Preferably, the addition of the at least one nucleating agent is carried out on the mixture in the molten state.

Preferably, the method for preparing the mixture according to the present invention comprises the step of: - adding at least one polyether selected from the group consisting of polyethylene glycol (PEG), and methoxy polyethylene glycol (mPEG).

Preferably, the at least one polyether is added in an amount in the range from 1% to 20% by weight, with respect to the total weight of the inert mixture.

In a further aspect thereof, the present invention relates to the use of the inert mixture according to the present invention to accumulate thermal energy.

Thanks to the aforementioned properties, in fact, the inert mixture according to the present invention is effectively usable for accumulating thermal energy.

The inert mixture according to the present invention, thanks to its characteristics, allows accumulating large amounts of thermal energy and then makes it available in a controllable manner, for example by means of heat exchange.

In other words, in the context of this aspect the present invention relates to a method for accumulating thermal energy which envisages the use of the inert mixture according to the present invention.

Preferably, in said use, the inert mixture according to the present invention accumulates thermal energy in a temperature window comprised between 70 °C and 110 °C.

Preferably, in said use the thermal energy is selected from the group consisting of: thermal or residual solar energy of a production process, and a combination thereof. More preferably in said use the thermal energy is solar thermal energy.

In a preferred embodiment of said aspect, the present invention relates to the use of the inert mixture according to the present invention as a phase change material.

Thanks to the specific combination of components thereof, the inert mixture according to the present invention has at least one phase transition in a window of temperatures normally used in thermal energy storage devices, which makes the use thereof as a phase change material particularly advantageous. Advantageously, the inert mixture according to the present invention has at least one phase transition in the temperature range from 70 °C to 110 °C.

Phase change materials can be used in all those sectors where it is intended to use a storage medium that stocks thermal energy and then make it available in a controllable manner through heat exchange, such as for example the sector of the production of steam or other hot fluids to be used for industrial and/or domestic applications.

Preferably, in said use the inert mixture according to the present invention is used as a phase change material. More preferably, in said use the inert mixture according to the present invention is used as a phase change material in the sector of the production of steam or other hot fluids to be used for industrial and/or domestic applications.

In a preferred aspect of the invention, the inert mixture according to the present invention comprises:

- at least one polyol selected from the group consisting of: glycerol, erythritol, mannitol, pentaerythritol, dulcitol, sorbitol, maltitol, and inositol; and

- at least one inorganic salt, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and at least one anion selected from the group consisting of: a halide, a silicate, and a sulfate;

wherein the mole ratio of the at least one polyol to the at least one inorganic salt is in the range from 99:1 to 60:40.

Advantageously, such a mixture exhibits in a temperature window between 70 and 110 °C a limited hysteresis range, high phase change energy, high chemical stability, chemical inertia characteristics as well as absence of significant sub-cooling phenomena. This makes said mixture particularly suitable to be used for accumulating thermal energy in the sector of the production of steam or other hot fluids to be used for industrial and/or domestic applications.

Preferably, said mixture has a water content equal to or less than 2% by moles, more preferably equal to or less than 1% by moles, even more preferably equal to or less than 0.5% by moles, with respect to the total moles of the inert mixture.

When the inert mixture has such a water content, in fact, it can be subjected to phase change cycles in a temperature window comprised between 70 °C and 110 °C without encountering any significant degradation phenomena and loss of performance as regards the maintenance of the phase change conditions, in terms for example of temperature or energy thereof. This leads to obtaining a longer useful life of the inert mixture with respect to similar mixtures having a water content higher than the one identified herein, when the same is used as a phase change material to accumulate thermal energy. A greater useful life of the inert mixture, under conditions of substantial constancy of the temperature and/or of phase change energy, allows using the same more efficiently for the accumulation of thermal energy and therefore leads to the realisation of devices and to the implementation of more efficient thermal energy accumulation methods.

Preferably, in one aspect of the invention, said mixture is used to accumulate thermal energy in a temperature window comprised between 70 °C and 110 °C, more preferably as a phase change material.

**EXPERIMENTAL PART**

The invention is now shown by means of some Examples to be considered for exemplary and non-limiting purposes thereof.

Reference Example 1

A sample of 32 grams of Mannitol food grade 99% (QINGDAO BOZEWON INTERNATIONAL TRADE CO.) and 68 grams of erythriol food grade 99% (QINGDAO BOZEWON INTERNATIONAL TRADE CO.) was subjected to density analysis at 25 °C, using a 100 ml graduated cylindrical container with a support base and a subdivision equal to 1 ml in Pyrex glass suitable to withstand temperature changes.

The sample weighed on digital scales (Steinberg Systems SBS-LW-7500A) with an accuracy of 0.1 grams was placed in the graduated container, appropriately heated until the sample was completely melted inside a thermostatically controlled stove and brought back to room temperature with a ramp of 2 °C/min to allow the sample to compact at the bottom of the graduated container.

At room temperature, the value of the volume occupied by the sample was read on the graduated scales and thus the density was calculated using the standard formula for defining the physical quantity density, according to equation (I):

$$\rho = Mass/Volume \ (I)$$

Table 1 shows the density value ($\rho$) obtained.

100 grams of the same mixture sample were also subjected to thermal characterization, using the apparatus depicted in Figure 1.

The apparatus of figure 1 consists of a high thermal conductivity container (2) provided with a temperature sensor (3) and a thermoregulation coil (4) on the outer wall containing the mixture under test (1).

The container (2) is contained in a second container (5) suitably insulated and provided with a temperature sensor (6). The latter is also provided with the necessary passages to allow the thermostating liquid to reach and return from the coil (4).

The external circuit is made with:

- a thermostatically controlled tank (12) provided with a mechanical agitator (13) and a temperature sensor (14) maintained at the set temperature by means of an electric resistance (15);

- a recirculation pump (11);

- 4 flow shut-off valves (10', 10", 10‴, 10⁗);

- a coolant inlet (16) and corresponding outlet (17);

- a flow meter (9) for reading/regulating the thermostat fluid; and

- two temperature sensors to detect the ΔT between the fluid inlet and outlet (7 and 8).

All temperature sensors (3), (6), (7), (8), (14) used are J-type thermocouples manufactured by Tersid srl (Milan, Italy) while the flow meter (9) is a Heinrichs TMU010-S coriolis effect with 4 - 20 mA output. Both the temperature sensors and the flow meter are connected to a Keysight 34972A data logger.

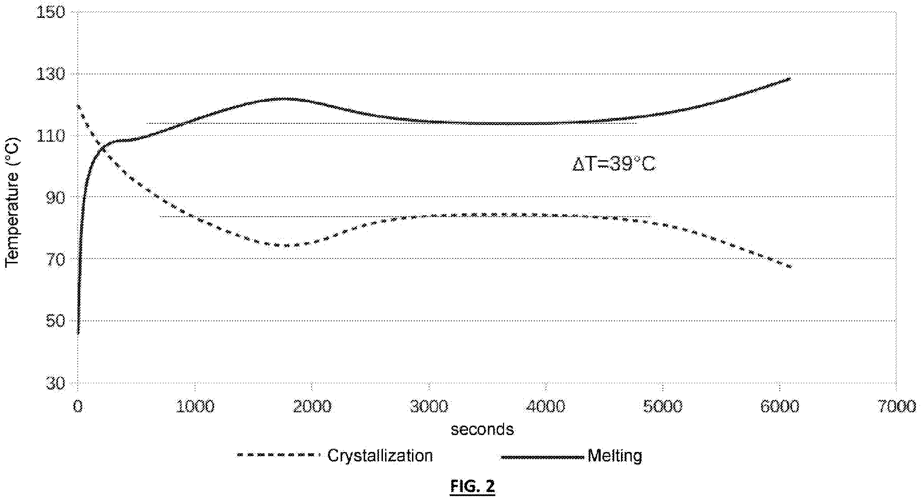

The acquisition of the signals from the temperature sensors and from the flow meter is carried out by means of a multi-channel board model 34901A inserted in the datalogger and the data recording is performed on files in CSV format by means of the "Keysight BenchLink Pro" software of the control computer. The acquired file is then processed to obtain the time/Temperature curves shown in figures 2-5, using libreoffice Calc software (version 6.0).

The characterization of the mixture sample was carried out by placing the 100 g of sample in the appropriately sealed container (1). It was then proceeded to pre-heat the tank (12) by means of the resistance (15) provided with a manual thermostat up to a temperature of 95°C in order to have a heat transport fluid at a constant temperature. Through the valves (10''' and 10'''') the heating circuit was opened and the circulation pump (11) was activated. Using a needle valve built into the flow meter (9), the fluid flow rate was regulated to 3 litres/minute to begin characterization.

Using the thermocouple (3), the temperature of the heating sample was recorded over time, which was then reported in the time/Temperature curve in Figure 2 as the melting (Melting) curve.

At the same time, the temperatures (7) and (8) were acquired from which it was possible to derive the $\Delta T$ of the thermal transport fluid and the instantaneous flow rate (9). In this case paraffinic oil Tecnol 13 SB of Oleotecnica S.p.A in Segrate (MI) has been used as transport fluid for which it is possible to calculate the energy accumulated by the sample as the integral of the power transferred from the fluid to the mixture, according to equation (II):

$$\Delta Hfus = \int (T_8 - T_7) \cdot M_9 \cdot Cp_{Oil} \ldots \ldots \ldots (II)$$

wherein:

$\Delta$Hmelt. is the melting enthalpy of the sample;

T8 is the outlet temperature of the thermal fluid after exchange with container 1 (temperature sensor 8);

T7 is the inlet temperature of the thermal fluid before exchange with container 1 (temperature sensor 7);

$M_9$ is the flow rate recorded by the coriolis effect flow meter with needle tap for manual regulation of the fluid flow rate by changing the pressure drop of the circuit (flow meter 9); and

$Cp_{Oil}$ is the value of the thermal capacity of the oil used at the mean temperature (Tm) of the thermal fluid, determined by the formula (IV):

$$Tm = (T_8+T_7)/2 \qquad (IV)$$

determined by formula (V):

$$Cp_{Oil} = 0.004395 \cdot Tm + 1.7564 \qquad (V)$$

with Cpon expressed in KJ/(Kg-K), and obtained from the experimental curve carried out by the chemical-physical characterization laboratory of the supplier.

For the measurement of the cooling curve it was proceeded with turning off the resistance (15) and through the valves (10''', 10''''), the heating circuit was excluded after stopping the pump (11) by inserting the cooling flow (16) (17) (10') and (10") consisting of a circuit of paraffinic oil Tecnol 13 SB of Oleotecnica S.p.A in Segrate (MI) cooled externally.

From these time-dependent data it was again possible to plot the Mixture temperature/time curve in the crystallization (Crystallization) phase and to calculate, similarly to what was done for the heating curve ,the enthalpy of crystallization, using equation (III):

$$\Delta Hcryst. = \int (T_8 - T_7) \cdot M_9 \cdot Cp_{Oil} \ldots \ldots \ldots (III)$$

wherein:

$\Delta H_{cryst.}$ is the enthalpy of crystallization of the sample;
$T_8$ is the outlet temperature of the thermal fluid after exchange with container 1 (temperature sensor 8);
$T_7$ is the inlet temperature of the thermal fluid before exchange with container 1 (temperature sensor 7);

$M_9$ is the flow rate recorded by the coriolis effect flow meter with needle tap for manual regulation of the fluid flow rate by changing the pressure drop of the circuit (flow meter 9); and

$Cp_{Oil}$ is the value of the thermal capacity of the oil used at the mean temperature (Tm) of the thermal fluid, determined by formulae (IV) and (V) reported above.

Figure 2 shows the time/Temperature curve obtained and Table 1 shows the data of melting temperature (Tmelt), crystallization temperature (Tcryst), melting enthalpy ($\Delta$Hmelt), and crystallization enthalpy ($\Delta$Hcryst) obtained through said characterization.

Reference Example 2

30.1 gram of Mannitol food grade 99% (QINGDAO BOZEWON INTERNATIONAL TRADE CO.), 64 grams of erythriol food grade 99% (QINGDAO BOZEWON INTERNATIONAL TRADE CO.) and 5.9 grams of trimethylolpropane (technical grade produced by Perstorp) were fed to a container provided with an agitator and suction system. The mixture was then stirred and heated to a temperature of 120°C under vacuum, progressively bringing the residual pressure in the container to values lower than 100 mBar, and then maintaining said vacuum degree for 20 minutes.

Subsequently, the mixture was cooled to room temperature while maintaining a vacuum and then atmospheric pressure (1 bar absolute) was restored.

The thus obtained mixture was subjected to density analysis and thermal characterization using the apparatus in Figure 1, under the same measurement conditions used in Reference Example 1.

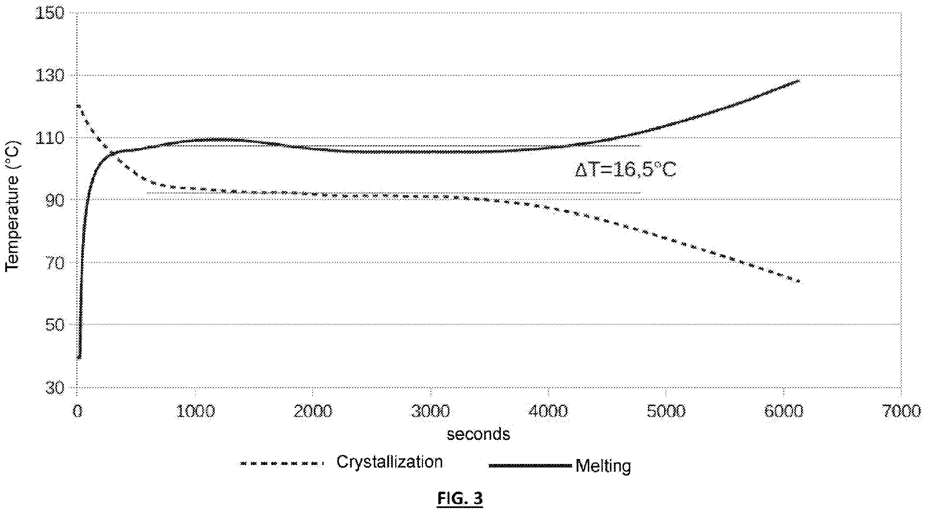

Figure 3 shows the time/Temperature curve obtained and Table 1 shows the data obtained through said characterizations, in comparison with the data obtained in Reference Example 1.

Example 2

27.2 grams of Mannitol food grade 99% (QINGDAO BOZEWON INTERNATIONAL TRADE CO.) and 57.9 grams of erythriol food grade 99% (QINGDAO BOZEWON INTERNATIONAL TRADE CO.) and 5.3 grams of trimethylolpropane (technical grade produced by Perstorp) were fed to a container provided with an agitator and suction system. The mixture was then stirred and heated to a temperature of 120°C under vacuum, progressively bringing the residual pressure in the container to values lower than 100 mBar, and then maintaining said vacuum degree for 20 minutes.

Subsequently, the mixture was cooled to room temperature while maintaining a vacuum and then atmospheric pressure (1 bar absolute) was restored.

Subsequently, 90.4 grams of the mixture thus obtained were fed to a container provided with agitator and suction system, together with 4 grams of sodium chloride (pharmaceutical grade with purity $\geq$ 99% (Merck)) and 5 grams of graphite (MG1596 - Sinograf). The mixture was then stirred and heated to a temperature of 100°C under vacuum, progressively bringing the residual pressure in the container to values lower than 100 mBar, and then maintaining said vacuum degree for 60 minutes.

The thus obtained mixture was subjected to density analysis and thermal characterization using the apparatus in Figure 1, under the same measurement conditions used in Reference Example 1.

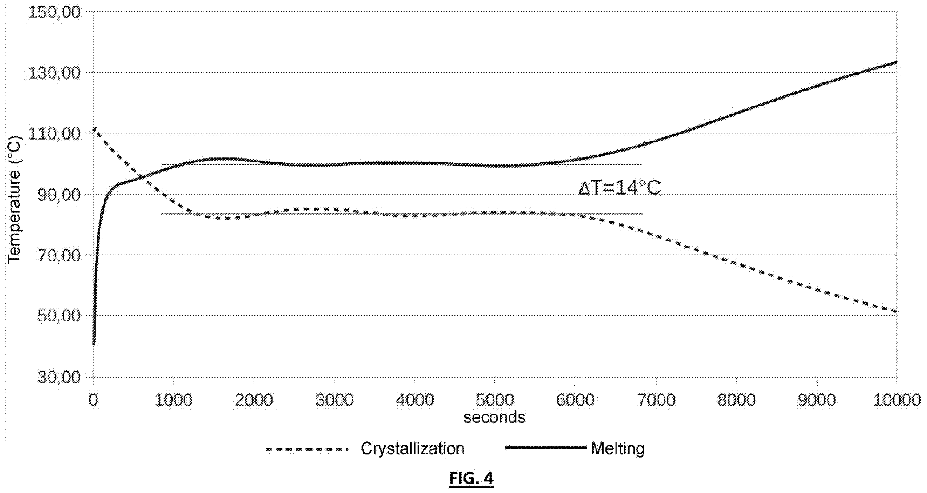

Figure 4 shows the time/Temperature curve obtained and Table 1 shows the data obtained through said characterizations, in comparison with the data obtained in Reference example 1.

TABLE 1

|  | $\rho$ (kg/l) | Tmelt. (°C) | Tcryst. (°C) | $\Delta$Hmelt. (kJ/kg) | $\Delta$Hcryst. (kJ/kg) |
|---|---|---|---|---|---|
| **Reference example 1** | 1.35 | 114 | 85 | 302 - 306 | 290 - 295 |
| **Reference Example 2** | 1.32 | 105 - 107 | 90 - 91 | 287 - 295 | 277 - 286 |
| **Example 2** | 1.39 | 99 -101 | 84 - 86 | 296 - 304 | 284 - 296 |

As can be seen from the analysis of the data in Table 1 and the comparison of Figures 2-4, the characterizations performed have made it possible to highlight that all the inert mixtures according to the present invention according to Reference Example 2 and Example 2, present usability window characteristics that remain below the equivalent mixture of polyols with phase change energies $\Delta$Hf and $\Delta$Hc comparable to those of the mixture of only polyols according to Reference Example 1. In addition to this, the inert mixtures according to the present invention according to Reference Example 2 and Example 2 present values of the hysteresis range of 15 - 17 °C and 14 - 17 °C, respectively, compared to the value of the mixture of only polyols which presents a hysteresis of 29 °C as also highlighted in Figures 2- 3 by means of the symbol $\Delta T$, which identifies the temperature difference recorded between the melting temperature and the crystallization temperature of the mixtures with consequent improvement in the usability of the returned heat of the mixtures according to the present invention compared to the use of the mixture of only polyols according to Reference example 1.

The mixtures identified also allow to operate at lower temperatures than the equivalent mixture of only polyols or of polyols + inorganic salt, falling within the range 70 - 110 °C and maintaining a similar phase transition enthalpy per unit volume.

## Claims

1. An inert mixture comprising:

   - at least one polyol selected from the group consisting of: glycerol, erythritol, mannitol, pentaerythritol, xylitol, dulcitol, sorbitol, ribitol, maltitol, and inositol;
   - at least one inorganic salt, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and at least one anion selected from the group consisting of: a halide, a silicate, and a sulfate; and
   - at least one hydroxylated compound selected from the group consisting of: trimethylolpropane, menthol, neopentyl alcohol, and guaiacol;

   wherein:

   - the mole ratio between the at least one polyol and the at least one inorganic salt is in the range from 99:1 to 50:50; and
   - the amount of said at least one hydroxylated compound is in the range from 1% to 20% by weight, with respect to the total weight of the inert mixture.

2. The inert mixture according to claim 1, wherein the at least one polyol is selected from the group consisting of: erythritol, mannitol, pentaerythritol, and inositol.

3. The inert mixture according to claim 1 or 2, wherein said at least one hydroxylated compound is trimethylolpropane.

4. The inert mixture according to any one of claims from 1 to 3, comprising at least one polyether selected from the group consisting of polyethylene glycol (PEG), and methoxy polyethylene glycol (mPEG).

5. The inert mixture according to claim 4, wherein said at least one polyether is present in an amount in the range from 1% to 20% by weight, with respect to the total weight of the inert mixture.

6. The inert mixture according to claim 4 or 5, wherein said at least one polyether has an average molecular weight in the range from 2000 to 6000 Da.

7. The inert mixture according to any one of claims from 4 to 6, wherein said at least one polyether comprises methoxy polyethylene glycol in an amount in the range from 1 to 20% by weight, with respect to the total weight of said at least one polyether.

8. The inert mixture according to any one of claims from 1 to 7, comprising at least one nucleating agent selected from the group consisting of carbon powder, metallic powder, and silicon carbide.

9. The inert mixture according to claim 8, wherein said at least one nucleating agent is present in the form of particles having a particle size in the range from 1 to 50 micron, measured by the laser diffractometry method according to the standard ISO 13320: 2009 (E).

10. Use of the inert mixture according to any one of claims from 1 to 9 to accumulate thermal energy.

11. Use of the inert mixture according to any one of claims from 1 to 9, to accumulate thermal energy in a temperature range from 70° C to 110° C.

**12.** Use of the inert mixture according to any one of claims from 1 to 9 as phase-change material.

**Patentansprüche**

**1.** Inertes Gemisch umfassend:

- mindestens ein Polyol, das aus der Gruppe bestehend aus: Glycerin, Erythrit, Mannit, Pentaerythrit, Xylit, Dulcit, Sorbit, Ribit, Maltit und Inosit ausgewählt wird;
- mindestens ein anorganisches Salz, wobei das anorganische Salz aus mindestens einem Metall, das aus der Gruppe bestehend aus: Lithium, Natrium, Kalium, Calcium, Magnesium, Strontium, Barium, Titan, Vanadium, Chrom, Mangan, Eisen, Kobalt, Nickel, Kupfer, Zink und Aluminium ausgewählt wird, und aus mindestens einem Anion, das aus der Gruppe bestehend aus: einem Halogenid, einem Silikat und einem Sulfat ausgewählt wird, besteht; und
- mindestens eine hydroxylierte Verbindung, die aus der Gruppe bestehend aus: Trimethylolpropan, Menthol, Neopentylalkohol und Guajakol ausgewählt wird;

wobei:

- das molare Verhältnis zwischen dem mindestens einen Polyols und dem mindestens einen anorganischen Salz im Bereich von 99:1 bis 50:50 liegt; und
- die Menge der mindestens einen hydroxylierten Verbindung bezogen auf das Gesamtgewicht des inerten Gemisches im Bereich von 1 bis 20 Gew.-% liegt.

**2.** Inertes Gemisch gemäß Anspruch 1, wobei das mindestens eine Polyol aus der Gruppe bestehend aus: Glycerin, Erythrit, Mannit, Pentaerythrit und Inosit ausgewählt wird.

**3.** Inertes Gemisch nach Anspruch 1 oder 2, wobei die mindestens eine hydroxylierte Verbindung Trimethylolpropan ist.

**4.** Inertes Gemisch nach einem der Ansprüche 1 bis 3, umfassend mindestens einen Polyether, der aus der Gruppe bestehend aus Polyethylenglykol (PEG) und Methoxypolyethylenglykol (mPEG) ausgewählt wird.

**5.** Inertes Gemisch nach Anspruch 4, wobei der mindestens eine Polyether in einer Menge im Bereich von 1 bis 20 Gew.-%, bezogen auf das Gesamtgewicht des inerten Gemisches, vorhanden ist.

**6.** Inertes Gemisch nach Anspruch 4 oder 5, wobei der mindestens eine Polyether ein durchschnittliches Molekulargewicht im Bereich von 2000 bis 6000 Da aufweist.

**7.** Inertes Gemisch nach einem der Ansprüche 4 bis 6, wobei der mindestens eine Polyether Methoxypolyethylenglykol in einer Menge im Bereich von 1 bis 20 Gew.-%, bezogen auf das Gesamtgewicht des mindestens einen Polyethers, umfasst.

**8.** Inertes Gemisch nach einem der Ansprüche 1 bis 7, das mindestens ein Nukleierungsmittel aus der Gruppe bestehend aus Kohlenstoffpulver, Metallpulver und Siliziumcarbid enthält.

**9.** Inertes Gemisch nach Anspruch 8, wobei das mindestens eine Nukleierungsmittel in Form von Teilchen mit einer Teilchengröße im Bereich von 1 bis 50 Mikron, die mit dem Laserdiffraktometrieverfahren gemäß der Norm ISO 13320: 2009 (E) gemessen wird, vorhanden ist.

**10.** Verwendung des inerten Gemisches gemäß einem der Ansprüche 1 bis 9 zur Speicherung von Wärmeenergie.

**11.** Verwendung des inerten Gemisches nach einem der Ansprüche 1 bis 9 zur Speicherung von Wärmeenergie in einem Temperaturbereich von 70° C bis 110° C.

**12.** Verwendung des inerten Gemisches gemäß einem der Ansprüche 1 bis 9 als Phasenwechselmaterial.

**Revendications**

1. Mélange inerte comprenant :

   - au moins un polyol sélectionné parmi le groupe constitué : du glycérol, de l'érythritol, du mannitol, du pentaérythritol, du xylitol, du dulcitol, du sorbitol, du ribitol, du maltitol et de l'inositol ;
   - au moins un sel inorganique, ledit sel inorganique étant d'au moins un métal sélectionné parmi le groupe constitué : du lithium, du sodium, du potassium, du calcium, du magnésium, du strontium, du baryum, du titane, du vanadium, du chrome, du manganèse, du fer, du cobalt, du nickel, du cuivre, du zinc et de l'aluminium et au moins un anion sélectionné parmi le groupe constitué : d'un halogénure, d'un silicate et d'un sulfate ; et
   - au moins un composé hydroxylé sélectionné parmi le groupe constitué : du triméthylolpropane, du menthol, de l'alcool néopentylique et du gaïacol ;

   dans lequel :

   - le rapport en moles entre l'au moins un polyol et l'au moins un sel inorganique est dans la plage de 99:1 à 50:50 ; et
   - la quantité dudit au moins un composé hydroxylé est dans la plage de 1 % à 20 % en poids, par rapport au poids total du mélange inerte.

2. Mélange inerte selon la revendication 1, dans lequel l'au moins un polyol est sélectionné parmi le groupe constitué : de l'érythritol, du mannitol, du pentaérythritol et de l'inositol.

3. Mélange inerte selon la revendication 1 ou 2, dans lequel ledit au moins un composé hydroxylé est le triméthylolpropane.

4. Mélange inerte selon l'une quelconque des revendications 1 à 3, comprenant au moins un polyéther sélectionné parmi le groupe constitué du polyéthylène glycol (PEG) et du méthoxy polyéthylène glycol (mPEG).

5. Mélange inerte selon la revendication 4, dans lequel ledit au moins un polyéther est présent dans une quantité dans la plage de 1 % à 20 % en poids, par rapport au poids total du mélange inerte.

6. Mélange inerte selon la revendication 4 ou 5, dans lequel ledit au moins un polyéther possède un poids moléculaire moyen dans la plage de 2000 à 6000 Da.

7. Mélange inerte selon l'une quelconque des revendications 4 à 6, dans lequel ledit au moins un polyéther comprend du méthoxy polyéthylène glycol dans une quantité dans la plage de 1 à 20 % en poids, par rapport au poids total dudit au moins un polyéther.

8. Mélange inerte selon l'une quelconque des revendications 1 à 7, comprenant au moins un agent de nucléation sélectionné parmi le groupe constitué de la poudre de carbone, d'une poudre métallique et du carbure de silicium.

9. Mélange inerte selon la revendication 8, dans lequel ledit au moins un agent de nucléation est présent sous la forme de particules ayant une taille particulaire dans la plage de 1 à 50 microns, mesurée par la méthode de diffractométrie laser selon la norme ISO 13320: 2009 (E).

10. Utilisation du mélange inerte selon l'une quelconque des revendications 1 à 9 pour accumuler de l'énergie thermique.

11. Utilisation du mélange inerte selon l'une quelconque des revendications 1 à 9, pour accumuler de l'énergie thermique dans une plage de température de 70 °C à 110 °C.

12. Utilisation du mélange inerte selon l'une quelconque des revendications 1 à 9 comme matériau à changement de phase.

**FIG. 1**

EP 4 127 094 B1

15

FIG. 2

**FIG. 3**

EP 4 127 094 B1

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019058478 A

- JP H1036824 A